# EUROPEAN PATENT APPLICATION

(11) **EP 3 203 561 A1**
(43) Date of publication of application: **09.08.2017**
(21) Application number: 15845749.9
(22) Date of filing: 29.09.2015
(51) Int. Cl.: H01M 8/04, H01M 8/10

(54) **ODORANT FOR FUEL GASES FOR ANION MEMBRANE FUEL CELLS, FUEL GAS AND POWER GENERATION SYSTEM USING ANION MEMBRANE FUEL CELL**

(30) Priority: 30.09.2014 JP 2014199741
(71) Applicant: Tokuyama Corporation, Shunan-shi, Yamaguchi-ken 745-8648 (JP)
(72) Inventor: NEGISHI, Takayuki, Shunan-shi Yamaguchi 745-8648 (JP); WATANABE, Shin, Shunan-shi Yamaguchi 745-8648 (JP)
(74) Representative: Schlief, Thomas P.
(86) International application number: PCT/JP2015/077572
(87) International publication number: WO 2016/052532

(57) **Abstract**

To provide an odorant for fuel gases for anion membrane fuel cells, which does not generate a harmful sulfur compound after combustion and does not deteriorate the performance of a fuel cell, while enabling leakage detection at low concentrations, and which enables detection of leakage of a gas by a means other than odor, for example, by visual observation. An odorant for fuel gases for anion membrane fuel cells, which imparts a fuel gas with an odor, and which is characterized in that the odorant contains at least one or more substances selected from the group consisting of ammonia, trimethylamine, triethylamine, N,N-diethylmethylamine, N,N-dipropylmethylamine, N,N-dipropylethylamine, N,N-diisopropylmethylamine, N,N-diisopropylethylamine, dimethylamine, diethylamine, dipropylamine, ethylmethylamine, propylmethylamine, propylethylamine, methylamine, ethylamine and propylamine.

## Description

### TECHNICAL FIELD

The present invention relates to a fuel gas odorant adding an odor to a fuel gas for an anion membrane fuel cell. Also, the present invention relates a power generation system using the anion membrane fuel cell using said fuel gas.

### DESCRIPTION OF THE RELATED ART

The fuel gas is essential for an industrial production and also in general households. As the use of the fuel gas, for example, it is used for obtaining the thermal energy by mixing and combusting air and oxygen, or for obtaining the electric energy by the fuel cell may be mentioned.

The fuel gas is convenient as it can be introduced to arbitrary places as long as the gas pipe is present, however on the other hand, the fuel leakage cannot be visually confirmed which is caused by deterioration of pipes or so. The leaked gas may cause an explosion when mixed with air, hence it is extremely important to detect the leaked gas in advance for prevention.

In order to attain this object, the odorant having specific smell is comprised in the fuel gas, so that the leakage can be easily detected. For such odorant, series of compounds such as mercaptans and sulfides have been used. However, these compounds generates sulfur oxides after the combustion of the fuel gas, hence this may cause air pollution, and if it is used for the fuel cell, the odorant in the fuel gas may poison the oxide catalyst of the fuel cell, and the performance of the fuel cell is significantly deteriorated.

Also, the detection of the leakage depends on the smell of these odorant, or depends on the gas detection apparatus; hence it cannot be visually detected. Therefore, it was necessary to approach close in order to confirm the gas leakage, or to set expensive gas detection system. Therefore, the detection method allowing visual detection the leakage from distant at a low cost was demanded.

The patent document 1 discloses the odorant for the hydrogen fuel for the fuel cell. This does not comprise the sulfur atom in the structure, thus there is no concern of poisoning the fuel cell catalyst. Also, since it does not have ionic property, the ion conduction in the fuel cell using the cation exchange membrane is not interfered. However, because it was made of hydrocarbon based compound, the threshold of the smell by human is high and the volatility is not enough, and thus the problem from the point of detecting the leakage at a low concentration still remains.

The patent document 2 discloses the odorant which adds a smell to the fuel gas or liquid fuel which does not comprise sulfur. The odorant disclosed in the patent document 2 does not include sulfur as similar to the patent document 1, hence when using the fuel gas the sulfur oxides is not generated which allowed reducing the environment pollution. However, these odorants can be detected by the odor, but for the detection, it was necessary to go to the place where the gas has leaked. Therefore, in addition to the detection by the odor, other method of detection was also in demand.

Further, when amine compounds such as methyl amine, trimethyl amine, dimethyl amine, ethyl amine or so which are described as the odorant in the patent document 2 are used as the odorant of a proton conducting type fuel cell, which is one type of the fuel cell and has become generally used as a domestic stationary power generator, the output thereof decreased significantly. That is, because the inside of the proton conducting type fuel cell is acidic, these amine compounds become quaternary ammonium ion, and it is immobilized as a counter ion of the cation exchange material used as the conductive material. Thereby, the proton conductivity decreases, and as a result, the output of the fuel cell decreases.

Further, the patent document 3 discloses the alkaline fuel cell power generation system which uses the mixed gas of ammonia and hydrogen as the fuel. Here, the content of the ammonia in the mixed gas is 0.1 to 10 mol/m³ (about 0.2 to 20 vol%). Also, the patent document 4 discloses the fuel for the solid polymer type fuel cell comprising the mixed gas having 60 to 99 vol% of ammonia and 40 to 1 vol% of hydrogen. One molecule of ammonia comprises 18 wt% of hydrogen atom, and it does not release carbon dioxide when combusted, furthermore it can be easily liquefied, hence it is expected as the fuel for various fuel cells. However, not only ammonia generates hydrogen, but also, as the proton conducting type fuel cell, a part of ammonia may be immobilized and become quaternary ammonium ion as mentioned in above, and may cause the output decrease. Also, ammonia is highly toxic, and when it is 2500 to 4500 ppm or so, this can be lethal in short period of time. Therefore, it is dangerous to use fuel gas comprising high concentration of ammonia, and multiple safety system will be necessary, thus the practical application has not been accomplished yet.

Further, the precious metal catalyst used for the electrode layer of the fuel cell is expensive, which is the major problem for the practical application. Therefore, the precious metal catalyst is made into nanosize to increase the surface area; thereby the catalytic activity is improved, thereby challenging to reduce the amount of use. However, extremely fine size precious metal catalyst tends to be poisoned by ammonia; hence it is not preferable to mix ammonia in the fuel gas.

As discussed in above, mixing of ammonia in the fuel of the fuel cell has various problems from the point of the output decrease by the immobilization of the ion and the catalyst poisoning, and the safety or so. On the other hand, a nitrogen containing basic compound such as ammonia has low threshold of smell detection, and does not generate the sulfur oxides when using the fuel gas or so, thus the environmental pollution can be reduced, therefore it is expected to have excellent effect as the odorant of the fuel gas for the fuel cell. However, the problems discussed in the above are the major problems for enabling the practical use.

### PRIOR ART

[Patent document 1] JP Patent Application Laid Open No.2003-155488
[Patent document 2] JP Patent Application Laid Open No.2007-119679
[Patent document 3] JP Patent Application Laid Open No.2011-34710
[Patent document 4] JP Patent Application Laid Open No.2011-198535

### DISCLOSURE OF INVENTION

### PROBLEM TO BE SOLVED BY THE INVENTION

As apparent from the above mentioned description of the related arts, the odorant which does not generate hazardous sulfur compound after the combustion, and does not deteriorate the performance of the fuel cell, but capable of detecting the leakage at low concentration is demanded.

Also, the development of the odorant which can detect the gas leakage by other methods than smell such as visual confirmation or so is also demanded.

### MEANS FOR SOLVING THE PROBLEM

The present inventors have found, as a result of the keen examination, that for the anion membrane fuel cell, these objects can be attained by using specific compound as the odorant.

That is, the present invention is the fuel gas odorant for anion membrane fuel cell, wherein said fuel gas odorant adds an odor to a fuel gas, and said odorant is at least one selected from the group consisting of ammonia, trimethyl amine, triethylamine ammonia, trimethyl amine, triethyl amine, N,N-diethylmethyl amine, N,N-dipropylmethyl amine, N,N-dipropylethyl amine, N,N-diisoproplmethyl amine, N,N-diisopropylethyl amine, dimethyl amine, diethyl amine, dipropyl amine, ethylmethyl amine, propylmethyl amine, propylethyl amine, methyl amine, ethyl amine, and propyl amine.

Also, the second aspect of the present invention is the fuel gas for anion membrane fuel cell comprising the fuel gas odorant according to the first aspect of the present invention.

Also, the third aspect of the present invention is the fuel gas for the anion membrane fuel cell of the second aspect of the present invention wherein the concentration of the fuel gas odorant in the fuel gas is 2 to 2000 ppm; and further the fourth aspect of the present invention is the fuel gas for the anion membrane fuel cell of the second or third aspect of the present invention wherein the fuel gas is hydrogen.

Also, the fifth aspect of the present invention is the power generation system using the anion membrane fuel cell using the fuel gas according to the second to fourth aspect of the present invention as the fuel gas. The sixth aspect of the present invention is the power generation system using the anion membrane fuel cell according to the fifth aspect of the present invention wherein the fuel gas is supplied to an anode chamber without the pre-treatment of removing the fuel gas odorant; and the seventh aspect of the present invention is the power generation system using the anion membrane fuel cell according to the fifth aspect of the present invention further comprising the detection means of the fuel gas leakage by pH measurement. The eighth aspect of the present invention is the power generation system according to the fifth aspect of the present invention wherein a precious metal supporting carbon catalyst is included in the electrode layer of the anode, and the amount of the precious metal of the precious metal supporting carbon catalyst is 50 wt% or less with respect to the entire weight of the electrode layer. The ninth aspect of the present invention is the use of the nitrogen containing basic compounds as the fuel gas odorant for the anion membrane fuel cell.

### EFFECT OF THE INVENTION

The fuel gas odorant of the present invention comprises the specific nitrogen compound. Therefore, the sulfur oxides are not generated after the combustion.

Also, when used for the anion membrane fuel cell, the nitrogen compound used for the odorant of the present invention does not compromise the ion conduction of the anion membrane (the anion exchange membrane), which is a constitution member of the anion membrane fuel cell, thus the performance is not deteriorated. Therefore, the fuel gas does not need to be removed, and it can be directly supplied to the device.

Even if the odorant adversely affects the device being supplied with the odorant, since the compound is highly water soluble, the fuel gas can be treated with water prior to the use for removal, then it may be supplied, thereby it can be used without any problem.

Further, the fuel gas odorant of the present invention has low threshold for the detection of smell by human body, thus it is detectable even at low concentration.

Also, since these compounds are strongly basic compounds, by using the simple detection apparatus which changes the color by alkaline such as pH test paper or so, the leakage thereof can be easily detected visually.

Therefore, the effect of the present invention is significant.

### BEST MODE TO CARRY OUT THE INVENTION

The odorant of the present invention includes at least one selected from the group consisting of ammonia, trimethyl amine, triethyl amine, N,N-diethylmethyl amine, N,N-dipropylmethyl amine, N,N-dipropylethyl amine, N,N-diisopropylmethyl amine, N,N-diisopropylethyl amine, dimethyl amine, diethtyl amine, dipropyl amine, ethylmethyl amine, propylmethyl amine, propylethyl amine, methyl amine, ethyl amine and propyl amine. Hereinafter, these may be referred as "the nitrogen containing basic compound" as a whole.

The basic compounds including nitrogen have specific smell in general, thus it is suitable as the odorant. In order to use as the odorant, preferably it is a gas at room temperature, and has high vapor pressure, and has low lower limit of the concentration which can be sensed by human.

Also, the odorant is preferably water soluble. The reason for this is as discussed in below. If such fuel causes adverse effect to the device being used, or if the performance as the fuel gas deteriorates due to such nitrogen containing basic compound mixed in the fuel gas as the odorant, it is preferable to use after removing the odorant. The odorant can be removed by simple method such as passing through the absorption solution such as water or so right before the device using the fuel gas, thus it can be used without any problem. Thus, the odorant is preferably highly water soluble. As examples of such compounds, ammonia and low molecular weight amines such as methyl amine, dimethyl amine, trimethyl amine, ethyl amine, diethyl amine, triethyl amine, ethylmethyl amine and propylamine or so are known.

Further, by using the amine compounds having strong basic property, the leakage detection can be done by evaluating the pH change. Therefore, the compound to be used is preferably strongly basic. As such compounds, among ammonia and amines, tertiary amines are suitable.

From the above point of view, as the odorant, ammonia; tertiary amines such as trimethyl amine, triethyl amine, N,N-diethylmethyl amine, N,N-dipropylmethyl amine, N,N-dipropylethyl amine, N,N-diisopropylmethyl amine, N,N-diisopropylethyl amine or so; secondary amines such as dimethyl amine, diethyl amine, dipropyl amine, ethylmethyl amine, propylmethyl amine, propylethyl amine or so; primary amines such as methyl amine, ethyl amine, propyl amine or so can be used. Particularly preferably, ammonia, trimethyl amine, triethyl amine, dimethyl amine, diethyl amine, methyl amine and ethyl amine can be used.

In the present invention, the fuel gas may be any gas as long as it is industrially used for the anion membrane fuel cell such as a city gas, a liquefied natural gas, a liquefied petroleum gas, hydrogen and carbon monoxide; however hydrogen is suitable.

The method of comprising the odorant of the present invention to the fuel is not particularly limited, and various methods can be used. For example, the method of filling the odorant in advance to the container such as cylinder or so and then further filling the fuel gas to the container; the method of adding and mixing the odorant gas after the fuel is taken out from the container or so may be mentioned.

In case the odorant cannot be comprised in sufficient concentration to the fuel gas since the odorant is liquefied due to the high pressure at the inside of the cylinder, then the odorant can be added after the fuel is taken out from the cylinder.

The concentration of the odorant of the present invention is difficult to set since it depends on the detection lower limit and the detection method of the used odorant, however preferably it is 2 to 2000 ppm, more preferably 10 to 1800 ppm, and particularly preferably 100 to 1500 ppm. As for the olfactory threshold of human, it is 1.5 ppm for ammonia, 0.035 ppm for monomethyl amine, 0.000032 ppm for trimethyl amine. When the fuel gas has leaked from the pipe or so, the concentration becomes low due to the diffusion, hence preferably the concentration is higher in the fuel than these thresholds. For example, in case of human, the concentration of ammonia that can be detected is 1.5 ppm, thus preferably it is added in higher concentration by several folds or more than that.

The concentration of the odorant of the present invention comprised in the fuel gas can be measured as discussed in the following. That is, the area of the infrared absorption peak specific to the odorant is quantified by infrared spectroscopy in a state of gas. The relation between the peak area and the concentration is obtained in advance using the gas comprising the odorant with known concentration, then by using this, the concentration of the odorant comprised can be obtained from the peak area obtained when measuring the fuel gas which is to be quantified. Alternatively, the fuel gas to be measured can be passed through certain amount of water so that the odorant of the present invention is absorbed by water. This odorant comprised in water will be ionized by taking hydrogen ion from water and forms quaternary ammonium ion. Therefore, it can be quantified by ion chromatograph. According to the volume of the fuel gas passed through water, the volume of water, and the quantified value of ion chromatograph, the concentration of the odorant comprised in the fuel gas can be obtained.

The odorant of the present invention can be detected from the method other than smell as it is basic. The odorant made of conventional mercaptan compounds or so cannot change pH, thus the detection was only possible by smell. On the contrary, the odorant of the present invention is made of basic compounds, thus in case of detecting the leakage, for example by placing the pH test paper close, it can be detected from color change.

The detection sensitivity in case of using the pH test paper depends largely on the sensitivity and the amount of the pigment used. The basic compounds added to the fuel is extremely low amount, thus in general a sufficient coloring does not occur by instantaneous exposure. Generally, several minutes to several tens of minutes of exposure is necessary. The procedure to include water in the pH test paper is preferably used, because this allows shortening the time of coloring, if the leakage occurs, since the basic compounds will dissolve in water and will be concentrated.

Further, the fuel comprising the odorant of the present invention can be used to the anion membrane fuel cell as it is. The anion membrane fuel cell is one kind of fuel cell which is an electro chemical device capable of taking out the chemical energy as electric power. The anion membrane fuel cell (AMFC) is categorized as solid polymer fuel cell together with the proton conducting membrane fuel cell (PEMFC).

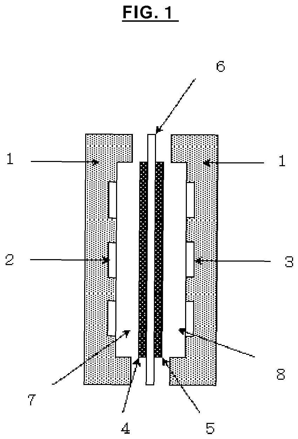

In the solid polymer type fuel cell, as shown in Fig.1, the space inside the battery partition wall 1 comprising fuel flow channels 2 and oxidant flow channels 3 respectively connecting to the outside are separated by an assembly body wherein an anode 4 and a cathode 5 are respectively bonded to both sides of the solid polymer electrolyte membrane 6. Thereby, the solid polymer type fuel cell has a basic structure comprising an anode chamber 7 connecting to the outside via the fuel flow channels 2, and a cathode chamber 8 connecting to the outside via oxidant flow channels 3. Further, in the solid polymer type fuel cell having such basic structure, the fuel such as hydrogen gas or methanol or so is supplied to said anode chamber 7 via the fuel flow channels 2, while supplying the oxygen comprising gas such as oxygen and air or so as the oxidant to the cathode chamber 8 via the oxidant flow channels 3; and an external load circuit is connected between both electrodes; thereby the electric energy is generated by following described mechanism.

The anion membrane fuel cell uses the anion membrane as the solid polymer electrolyte membrane 6, and the proton conducting membrane fuel cell uses the cation exchange membrane as the solid polymer electrolyte membrane 6.

In case of the anion membrane fuel cell, water, oxygen and electron contact with the catalyst at the cathode 5 and generate hydroxide ion (OH⁻) which conducts through the solid polymer electrolyte membrane 6 as the anion exchange membrane and moves to the anode chamber, then reacts with the fuel gas at the anode 4 thereby water and carbon dioxide are generated. On the other hand, the electron is generated by the reaction at the anode 4, but it moves to the cathode 5 via the external load circuit, thus the energy of the above mentioned reaction can be used as the electric energy.

At the inside of the anion membrane fuel cell which generates the power by such mechanism is constantly under basic atmosphere, hence even if the basic compounds are comprised in the fuel cell, the power generation can continue without any particular problem, hence the fuel cell comprising the odorant of the present invention can be used in good condition.

Note that, in case of the proton conducting membrane fuel cell, the odorant of the present invention is ionized in the proton conducting membrane which is under acidic atmosphere, and immobilized as the counter ion of the proton conducting membrane that is the cation exchange membrane, hence the proton conductivity is decreased, and the fuel cell performance is decreased as well. On the other hand, the anion exchange membrane fuel cell uses the solid electrolyte comprising the quaternary ammonium base, and hydroxide ion (OH⁻) is the conducting species. When the nitrogen containing basic compound as the odorant is included in the fuel gas, even if the quaternary ammonium ion is generated and immobilized, the structure will be the same as the electrolyte membrane, thus chances of deteriorating the fuel cell performance is low.

In case the odorant of the present invention may cause adverse effect to the device supplied with the fuel, the fuel gas can be removed by passing through the water before supplying to the device. The odorant of the present invention comprises the basic nitrogen compounds, hence by using the acidic aqueous solution as the absorption solution, the odorant binds with the hydrogen ion and ionized, and the water solubility is enhanced thus the removal efficiency is enhanced. As the acid comprised in water at this time, from the point of preventing the mixing to the fuel gas, the acids with no vapor pressure or small pressure such as sulfuric acid or phosphoric acid may be mentioned.

The anion membrane fuel cell is known to take carbon dioxide in the air into the cathode, and discharge from the anode. The fuel gas including the odorant of the present invention is supplied to the anode, but because the odorant is a basic compound, the water soluble salt is formed by binding with the discharged carbon dioxide. In case the hydrogen is used at the anode, water is generated by the reaction of H₂ + 2OH⁻→ 2H₂O + 2e⁻, thus the generated salt is discharged together with water. Therefore, the amount of odorant included in the discharged gas from the fuel cell can be lowered compared to the amount supplied. Particularly, in case the concentration of the odorant is lowered than the carbon dioxide gas concentration in the air, it can be suitably used because the bad smell by the discharged gas does not occur since the odorant is completely removed.

As such, for the proton conducting membrane fuel cell, the use of the nitrogen containing basic compound such as ammonia or so as the odorant had a major problem which is the decrease of the output due to the ion immobilization; however the anion membrane fuel cell does not have such problem. Therefore, as the fuel cell odorant for the anion membrane fuel cell, the nitrogen containing basic compound such as ammonia or so works effectively.

Further, the nitrogen containing basic compound such as ammonia or so act as the catalyst poison against the precious metal catalyst used as the electrode catalyst of the fuel cell. As the precious metal catalyst, platinum supporting carbon catalyst, and palladium supporting carbon catalyst are known. In order to improve the catalyst activity, these are made into nanosize, however these tend to be easily poisoned along with the increase of the surface area. However, the nitrogen containing basic compound of the present invention is not to be used as the fuel, and it is only used as the odorant, hence the amount of use is extremely low. Therefore, the chances of the catalyst being poisoned are low.

That is, the odorant of the present invention can be used particularly suitably for the fuel cell system using the nanosized precious metal catalyst. As the nanosized catalyst, in case of the platinum supporting carbon catalyst and palladium supporting catalyst, the specific surface area of the precious metal (platinum and palladium) is as small as 100 m²/g or so. In the precious metal supporting catalyst, the small precious metal is supported by carbon, and the electrode layer is constituted using the appropriate resin component as the binder. The catalyst activity is improved due to the nanosized precious metal component, hence the amount of use can be reduced; and in the preferable fuel cell system of the present invention, the precious metal amount is 50 wt% or less, more preferably 5 to 45 wt% and even more preferably 10 to 40 wt% with respect to the entire weight of the electrode layer. In the present invention, the odorant concentration in the fuel gas is 2 to 2000 ppm, thereby the odorant effectively functions without compromising the activity of the nanosized precious metal catalyst. Even in case of using the extremely fine particle precious metal catalyst having even larger specific surface area of 100 to 200 m²/g, by making the odorant concentration to 10 to 1500 ppm or so, it can be effectively function as the odorant without compromising the catalyst activity.

Further, the present invention uses the nitrogen containing basic compound as the odorant, thus small amount is sufficient as the used amount. Also, in the anion membrane fuel cell, the nitrogen containing basic compound used as the odorant is discharged as the water soluble salt. Further, the nitrogen containing basic compound can be easily detected by pH change. Therefore, the safety system can be constituted relatively simply and easily, thus the cost for the entire power generation system can be reduced.

Hereinafter, the present invention will be described based on the examples, however these are merely an example, and the present invention is not to be limited thereto.

### EXAMPLE

### (Examples 1 to 10)

The odorant of the present invention having the concentration shown in Table 1 was added to hydrogen as the fuel gas. The fuel gases added with these odorants were released into the atmosphere at 1 ml/min. The smell was detected by nose at 50 cm above, thereby the effectiveness of the odorant was verified.

**[Table 1]**

| Example No. | Type of odorant | Added concentration (ppm) to fuel gas | Result of detection by nose |
|---|---|---|---|
| | | | (A: extremely strong smell B: strong smell C: light smell) |
| 1 | Ammonia | 200 | A |
| 2 | Ammonia | 2 | B |
| 3 | Trimethyl amine | 2 | B |
| 4 | Trimethyl amine | 1000 | A |
| 5 | Methyl amine | 10 | B |
| 6 | Dimethyl amine | 10 | A |
| 7 | Ethyl amine | 50 | B |
| 8 | Diethyl amine | 100 | A |
| 9 | Triethyl amine | 1800 | A |
| 10 | N,N-diisopropylethyl amine | 2000 | C |

### (Example 11)

Using the fuel gas of the example 1, the same experiments as the examples 1 to 10 were carried out except that the smell was not detected by nose, but by placing the pH test paper. The pH test paper prior to the experiment was yellow. When the color after leaving for 30 minutes was verified, the pH test paper changed to blue which indicates alkaline. This shows that the odorant of the present invention can be detected by other method than smell.

### (Example 12)

At the center of both sides of the anion exchange membrane 8 made by Tokuyama Corporation) having a square size of 8 cm x 8 cm, the mixture of the anion exchange resin binder (made by Tokuyama Corporation) and platinum supporting carbon catalyst (made by Tanaka Kikinzoku Kogyo) was coated in a square size of 2.3 cm x 2.3 cm, thereby the membrane electrode assembly was produced. Then, the catalyst part was held between two carbon porous boards having a square size of 2.3 cm x 2.3 cm and the thickness of about 200 µm, and it was assembled in the commercially available fuel cell (made by NF Corporation). The fuel cell of the example 1 was supplied to the anode side at 50°C and 50 ml/min. Wet air was supplied to the cathode side at 50°C and the humidity of 100%. The cell temperature was 50°C. The electronic load device (made by NF Corporation) was connected and the power was generated for 2 hours at the cell voltage of 0.2V, then the current density was recorded. The result is shown in Table 2.

### (Examples 13 to 21)

The same measurements as same as the example 12 were carried out, except for using the fuel gases of the examples 2 to 10 as the gases supplied to the anode side. The results are shown in Table 2.

### (Comparative example 1)

The same measurement as same as the example 12 was carried out except for using hydrogen as the only gas supplied to the anode side. The result is shown in Table 2.

The example 12 and the comparative example 1, both were capable of generating the power at almost the same current density. That is, the fuel gas comprising the odorant of the present invention can be used without decreasing the power when used for the anion membrane fuel cell.

**[Table 2]**

| Example No. | Type of odorant | Added concentration (ppm) to fuel gas | Current density (mA/cm²) at cell voltage of 0.2V | Output power (mW/cm²) at cell voltage of 0.2V |
|---|---|---|---|---|
| 12 | Ammonia | 200 | 549 | 109.8 |
| 13 | Ammonia | 2 | 546 | 109.2 |
| 14 | Trimethyl amine | 2 | 546 | 109.2 |
| 15 | Trimethyl amine | 1000 | 549 | 109.8 |
| 16 | Methyl amine | 10 | 545 | 109.0 |
| 17 | Dimethyl amine | 10 | 546 | 109.2 |
| 18 | Ethyl amine | 50 | 544 | 108.8 |
| 19 | Diethyl amine | 100 | 544 | 108.8 |
| 20 | Triethyl amine | 1800 | 548 | 109.6 |
| 21 | N,N-diisopropylethyl amine | 2000 | 548 | 109.6 |
| Comparative example 1 | - | - | 546 | 109.2 |

### BRIEF DESCRIPTION OF THE DRAWINGS

- **FIG.1**: is the conceptual figure showing the basic structure of the solid polymer type fuel cell.

### NUMERICAL REFERENCES

- 1;: Battery partition wall
- 2;: Fuel flow channel
- 3;: Oxidant gas flow channel
- 4;: Anode
- 5;: Cathode
- 6;: Solid polymer electrolyte (anion exchange membrane)
- 7;: Anode chamber
- 8;: Cathode chamber

## Claims

1. A fuel gas odorant for an anion membrane fuel cell, wherein said fuel gas odorant adds an odor to a fuel gas, and said odorant is at least one selected from the group consisting of ammonia, trimethyl amine, triethyl amine, N,N-diethylmethyl amine, N,N-dipropylmethyl amine, N,N-dipropylethyl amine, N,N-diisopropylmethyl amine, N,N-diisopropylethyl amine, dimethyl amine, diethtyl amine, dipropyl amine, ethylmethyl amine, propylmethyl amine, propylethyl amine, methyl amine, ethyl amine and propyl amine.

2. A fuel gas for the anion membrane fuel cell including the fuel gas odorant as set forth in claim 1.

3. The fuel gas for the anion membrane fuel cell as set forth in claim 2, wherein a concentration of the fuel gas odorant is 2 to 2000 ppm in the fuel gas.

4. The fuel gas for the anion membrane fuel cell as set forth in claim 2 or 3, wherein the fuel gas is hydrogen.

5. A power generation system using an anion membrane fuel cell, wherein said power generation system uses an anion membrane fuel cell comprises an electrolyte membrane made of an anionic exchange membrane, and a pair of anode and cathode electrodes placed on both side of said electrolyte membrane,
a fuel gas is supplied to an anode chamber, and on the other hand an oxide gas is supplied to a cathode chamber, and
the fuel gas as set forth in any one of claims 2 to 4 is used as the fuel gas supplied to the anode chamber.

6. The power generation system using the anion membrane fuel cell as set forth in claim 5, wherein the fuel gas is supplied to the anode chamber without a pre-treatment for removing a fuel gas odorant.

7. The power generation system using the anion membrane fuel cell as set forth in claim 5 comprising a detection means for fuel gas leakage by pH measurement.

8. The power generation system as set forth in any one of claims 5 to 7, wherein a precious metal supporting carbon catalyst is included in an electrode layer of anode, and an amount of precious metal in the precious metal supporting carbon catalyst is 50 wt% or less with respect to entire weight of the electrode layer.

9. A use of at least one selected from the group consisting of ammonia, trimethyl amine, triethyl amine, N,N-diethylmethyl amine, N,N-dipropylmethyl amine, N,N-dipropylethyl amine, N,N-diisopropylmethtyl amine, N,N-diisopropylethyl amine, dimethyl amine, diethtyl amine, dipropyl amine, ethylmethyl amine, propylmethyl amine, propylethyl amine, methyl amine, ethyl amine and propyl amine as the fuel gas odorant for an anion membrane fuel cell.
